# EUROPÄISCHE PATENTSCHRIFT

(11) **EP 2 925 189 B1**
(45) Veröffentlichungstag und Bekanntmachung des Hinweises auf die Patenterteilung: **25.10.2017**
(21) Anmeldenummer: 14830528.7
(22) Anmeldetag: 23.12.2014
(51) Int. Cl.: A46B 3/18, A46B 7/04, A46B 13/00, A01K 13/00, A46B 15/00, A46B 13/02

(54) **KASSETTENBÜRSTE**
CASSETTE BRUSH
BOÎTIER DE BROSSE

(30) Priorität: 21.01.2014 DE 102014100615
(43) Veröffentlichungstag der Anmeldung: 07.10.2015
(73) Patentinhaber: Baier, Alfred, 83700 Rottach-Egern (DE)
(72) Erfinder: Baier, Alfred, 83700 Rottach-Egern (DE)
(74) Vertreter: MFG Patentanwälte Meyer-Wildhagen Meggle-Freund Gerhard PartG mbB
(86) Internationale Anmeldenummer: PCT/EP2014/079275
(87) Internationale Veröffentlichungsnummer: WO 2015/110244

(56) Entgegenhaltungen:
- CH-A- 293 951
- DE-A1- 19 517 700
- DE-U1-202005 003 023
- DE-U1-202008 002 071
- JP-A- 2001 120 098

## Beschreibung

### GEBIET DER ERFINDUNG

Die vorliegende Erfindung bezieht sich auf eine Bürstvorrichtung zum Bürsten, Kämmen, Striegeln, Massieren oder Entfilzen, insbesondere für die Fellpflege von Haustieren, sowie auf ein Bürstensystem mit einer solchen Bürstvorrichtung mit austauschbaren Bürstenkassetten.

### HINTERGRUND DER ERFINDUNG

Aus der japanischen Patentanmeldung JP 2001120098 A ist eine Vorrichtung zum Pflegen von Tierhaaren bekannt. Die Vorrichtung weist einen Bürstriemen auf, der zwei Rollen umläuft und auf seiner Oberfläche mit Pflegeelementen besetzt ist. Der Bürstriemen wird mittels eines Antriebsmotors angetrieben, der zwischen den Rollen verbaut ist. Eine Absaugvorrichtung saugt Tierhaare ab, die an den Pflegeelementen des Riemens anhaften.

Aus der deutschen Gebrauchsmusterschrift DE 20 2005 003 023 U1 ist ein Reinigungssystem zum Reinigen eines Sportgeräts, insbesondere eines Golfschlägers bekannt, wobei das Reinigungssystem modular aufgebaut ist.

Aus der deutschen Gebrauchsmusterschrift DE 20 2008 002 071 U1 ist eine Aufnahmevorrichtung in Form einer, in einem Bodenreinigungsgerät ein- und ausschiebbaren Kassette bekannt.

Aufgabe der vorliegenden Erfindung ist es, eine verbesserte Bürstvorrichtung zum Bürsten, Kämmen, Striegeln, Massieren oder Entfilzen, insbesondere für die Fellpflege von Haustieren zur Verfügung zu stellen.

### ZUSAMMENFASSUNG DER ERFINDUNG

Die vorliegende Erfindung betrifft eine Bürstvorrichtung mit einer Kassettenaufnahme zur Aufnahme einer Bürstenkassette mit einem antreibbaren Bürstriemen. Die Kassettenaufnahme und die Bürstenkassette sind so ausgelegt, dass die Bürstenkassette in die Kassettenaufnahme einsetzbar und aus dieser wieder entfernbar ist. Dadurch kann eine Bürstenkassette leicht durch eine andere Bürstenkassette ausgetauscht werden. So wird es beispielsweise ermöglicht, je nach Bedarf Bürstenkassetten mit unterschiedlichen Bürstriemen einzusetzen, die jeweils für spezielle Pflegeanwendungen optimiert sind. Auch können dadurch defekte oder abgenutzte Bürstriemen leicht ersetzt werden.

Bei der Kassettenaufnahme kann es sich um ein Gehäuse aus Metall oder Kunststoff handeln, das zu einer oder mehreren Seiten hin ganz oder teilweise geöffnet ist. Dadurch kann eine Bürstenkassette leicht in die Kassettenaufnahme eingeführt werden oder aus dieser entfernt werden.

Der Bürstriemen wird vorzugsweise als Flachriemen in Gestalt eines Endlosbandes ausgebildet und kann aus einem flexiblen Kunststoffmaterial gefertigt werden. Der Bürstriemen bürstet in Längsrichtung ähnlich der natürlichen Bürstbewegung beim Haare bürsten. Vorzugsweise wird die Länge des Bürstriemens so ausgelegt, dass eine ausreichend lange Längsbewegung von Haaren realisiert wird, um die gewünschten Pflegeerfolg zu erzielen. Beispielsweise für die Pflege von Langhaarhunden ist eine Riemenlänge von etwa 30 cm bevorzugt, so dass eine Längsbewegung der Haare über eine Strecke von etwa 10 cm erzielt wird. Je nach Anwendungsfall kann die Riemenlänge auch länger oder kürzer ausgeführt werden.

Wird der Bürstriemen aus einem elastischen Material ausgebildet, so kann ein sonst möglicherweise erforderliches Nachspannen vermieden werden.

Der Bürstriemen ist mit Besatzmaterial besetzt, z.B. Borsten, Zinken, oder dergleichen. Bei dem Besatzmaterial kann es sich um Federstahldraht handeln, der einen runden Körper aufweist und U-förmig gebogen ist. Der Federstahldraht kann eine horizontale Biegung im waagerechten, unteren Mittelteil des U-förmigen Drahtes aufweisen, und/oder an den Enden gebogen sein. Der Federstahldraht kann ferner auch arrondierte Enden aufweisen. Alternativ kann es sich bei dem Besatzmaterial auch um Kunststoff, Naturfaser, andere Metalle, oder Kombinationen der genannten Materialien handeln.

Der Bürstriemen kann mit oder ohne eingefrästen Strukturen, wie Löchern, Querrillen, Nuten, oder dergleichen ausgeführt werden, welche die Befestigung des Besatzmaterials erleichtern.

Der Bürstriemen wird vorzugsweise als umlaufender Bürstriemen (nach der Art eines "Förderbandes") ausgebildet und wird über eine in der Bürstenkassette gelagerten Antriebsachse angetrieben. Die Kassettenaufnahme lagert einen Treibzapfen zur mechanischen Ankopplung dieser Antriebsachse. Der Treibzapfen greift in die Antriebsachse ein, wenn die Bürstenkassette in die Kassettenaufnahme eingesetzt wird. Dadurch wird eine mechanische Kopplung der Bürstenkassette an die Kassettenaufnahme erzielt, über die eine Antriebskraft vom Treibzapfen auf die Antriebsachse übertragen werden kann. Der Treibzapfen kann beispielsweise als Außensechskant ausgeführt werden. Die Ankopplung könnte vom Fachmann auch auf alternative Weise realisiert werden, z.B. indem die Antriebsachse der Bürstenkassette einen sechskantförmigen Zapfen aufweist, der in eine Triebvorrichtung (Getriebe, Motorachse oder dergleichen) eingreift. Es kommt hier lediglich darauf an, dass die Antriebsachse der Bürstenkassette beim Einsetzen einer Bürstenkassette in die Kassettenaufnahme mit einem Antriebsmotor bzw. einem Getriebe auf lösbare Weise zusammengekoppelt werden, so dass eine Antriebskraft eines Antriebsmotors, ggf. untersetzt mittels der Übersetzungswirkung eines Getriebes, auf die Antriebsachse der Bürstenkassette übertragen wird.

An der Kassettenaufnahme ist ferner ein Antriebsmotor befestigt, der den Treibzapfen antreibt. Bei diesem Antriebsmotor kann es sich beispielsweise um einen Elektromotor oder dergleichen handeln. Der Antriebsmotor wird so an der Kassettenaufnahme befestigt, dass dieser bei eingesetzter Bürstenkassette ganz oder teilweise in der Bürstenkassette untergebracht ist.

Der Antriebsmotor kann unmittelbar oder mittelbar an der Kassettenaufnahme befestigt werden.

Die Bürstenkassette weist eine Öffnung auf, die zum Einführen des Antriebsmotors in die Bürstenkassette beim Einsetzen der Bürstenkassette in die Kassettenaufnahme ausgelegt ist. Über diese Öffnung in der Bürstenkassette kann der Antriebsmotor ganz oder teilweise in die Bürstenkassette eingeführt werden, so dass dieser bei in die Kassettenaufnahme eingesetzter Bürstenkassette ganz oder teilweise im Inneren der Bürstenkassette untergebracht ist. Auf diese Weise wird eine platzsparende Ausführung der Bürstvorrichtung realisiert. Die Öffnung kann beispielsweise zwischen zwei Rollen vorgesehen werden, über welche der Bürstriemen läuft. Die Öffnung kann sich beispielsweise etwa im Zentrum der Bürstenkassette befinden, so dass sich eine ausgewogene Gewichtsverteilung der Bürstvorrichtung ergibt.

Die Öffnung für die Aufnahme des Antriebsmotors kann so ausgelegt werden, dass sie ein im Wesentlichen formschlüssiges Einführen des Antriebsmotors in die Bürstenkassette gestattet. Vorzugsweise wird eine formschlüssige Öffnung in der Bürstenkassette mit etwas Spiel ausgelegt, um das Einsetzen der Bürstenkassette in die Kassettenaufnahme zu erleichtern. Alternativ kann die Öffnung in der Bürstenkassette auch in anderer Gestalt ausgebildet werden. Beispielsweise könnte eine Seite der Kassettenaufnahme ganz oder teilweise geöffnet sein, so dass beim Einsetzen der Bürstenkassette in die Kassettenaufnahme der Antriebsmotor über diese geöffnete Seite ganz oder teilweise in die Bürstenkassette eingeführt wird.

Die Bürstenkassette weist vorzugsweise zwei Rollen auf, die als Umlaufrollen dienen und um die der Bürstriemen läuft. Wenigstens eine der Rollen ist als Antriebsrolle auf der Antriebsachse der Bürstenkassette montiert, so dass im eingesetzten Zustand der Bürstenkassette auf diese Antriebsrolle die Antriebskraft des Antriebsmotors übertragen wird. Die Antriebsrolle kann so ausgelegt werden, dass sie als Rutschkupplung bei Überlast wirkt.

An der Kassettenaufnahme ist ferner ein Getriebe befestigt, das den Antriebsmotor mit dem Treibzapfen koppelt. Dieses Getriebe kann auf einer Außenseite der Kassettenaufnahme befestigt werden. Der Antriebsmotor kann direkt an der Kassettenaufnahme befestigt werden oder in dieser fest montiert werden.

Die Kassettenaufnahme weist vorzugsweise eine Aussparung auf, die zur formschlüssigen Aufnahme wenigstens eines Teils der Bürstenkassette ausgelegt ist, so dass die Bürstenkassette im gekoppelten Zustand in einer vorbestimmten Position gehalten wird.

Die Bürstvorrichtung kann ferner eine Arretierung aufweisen, welche zur Arretierung der Bürstenkassette im eingesetzten Zustand dient. Bei dieser Arretierung kann es sich beispielsweise um eine Arretierungsschraube handeln.

Die Kassettenaufnahme kann zu einer Seite geöffnet sein, so dass die Bürstenkassette durch eine Bewegung in Richtung der Antriebsachse der Bürstenkassette in die Kassettenaufnahme eingesetzt oder aus dieser wieder entnommen werden kann.

Die beschriebene Bürstvorrichtung kann elektrisch angetrieben werden. Mittels eines Elektrokabels kann die Bürstvorrichtung mit elektrischer Energie versorgt werden, die einen Elektromotor antreibt.

An der Kassettenaufnahme kann ein Haltegriff befestigt werden, über welchen die Bürstvorrichtung gehalten und betätigt werden kann. Kassettenaufnahme und Haltegriff könnten mehrstückig oder einstückig gefertigt werden. Vorzugsweise ist die Kassettenaufnahme über einen solchen Griff mit einer Hand zu bedienen. Am Griff und/oder auf der Kassettenaufnahme können Steuerungselemente vorgesehen werden, wie beispielsweise ein Ein/Aus-Schalter und/oder ein Leistungsregler.

An einem Ende der Kassettenaufnahme kann ein Absaugkanal vorgesehen werden, der eine Anschlussmöglichkeit für eine externe Absaugeinrichtung, beispielsweise einen Haushaltssauger, bietet. Verschmutzungen, Haare oder andere Partikel im Bürstenbereich können damit während des Bürstvorgangs kontinuierlich abgesaugt werden.

Ein Bürstensystem mit einer wie oben beschriebenen Bürstvorrichtung umfasst mehrere Bürstenkassetten mit jeweils verschiedenen Bürstriemen. Die Kassettenaufnahme der Bürstvorrichtung ist dazu ausgelegt, die mehreren Bürstenkassetten in austauschbarer Weise aufzunehmen. Dadurch kann eine Bürstenkassette leicht entnommen werden und durch eine andere Bürstenkassette ausgetauscht werden. So wird es durch das Bürstensystem beispielsweise ermöglicht, je nach Bedarf Bürstenkassetten mit unterschiedlichen Bürstriemen einzusetzen, die jeweils für spezielle Pflegeanwendungen optimiert sind.

Die erfindungsgemäße Bürstvorrichtung bzw. das erfindungsgemäße Bürstensystem können für das Glattkämmen der Deckhaare, das Auskämmen und Entfilzen der Unterwolle, das Auskämmen und Absaugen abgestorbener Haare insbesondere bei Fellwechsel, das Auskämmen und Absaugen von Schmutzpartikeln und Schuppen und das Belüften und Massieren des Fells und der Haut verwendet werden.

Ein Bürstriemen gemäß eines Ausführungsbeispiels weist ein Grundriemenband auf, auf dem ein oder mehrere Kammelemente derart befestigt sind, dass sie im Wesentlichen senkrecht zur Oberfläche des Grundriemenbandes stehen. Ein Bürstriemen mit einem oder mehreren Kammelementen ist besonders dazu geeignet, Unterwolle auszudünnen oder abgestorbene Haare effektiv und schnell aus dem Fell zu entfernen. Die Kammelemente können aus unterschiedlichen Materialien bestehen und in der Form variieren, je nach Anwendungsfall (Kurzhaar-/ Langhaar-Fell) Vorzugsweise werden auf einem Bürstriemen vier bis sechs Kammelemente angeordent. Auf dem Bürstriemenband können zudem mehrere Borstenbündel vorgesehen werden, die zwischen den Kammelementen auf dem Grundriemenband befestigt sind.

Weitere Aspekte und Merkmale der vorliegenden Erfindung ergeben sich aus den abhängigen Ansprüchen, den beigefügten Zeichnungen und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnungen beschreiben, in denen:
Fig. 1a in einer schematischen Darstellung eine Ausführungsform der erfindungsgemäßen Bürstvorrichtung mit einer Bürstenkassette und einer Kassettenaufnahme zeigt;
Fig. 1b in einer schematischen Darstellung eine Ausführungsform der erfindungsgemäßen Bürstvorrichtung in einer Ansicht zeigt, in der eine Bürstenkassette aus der Kassettenaufnahme entnommen ist;
Fig. 1c in einer schematischen Darstellung eine Ausführungsform der erfindungsgemäßen Bürstvorrichtung in einer Vorderansicht zeigt;
Fig. 2a und 2b in einer schematischen Darstellung eine Seitenansicht bzw. eine Vorderansicht einer Ausführungsform einer Bürstenkassette zeigen;
Fig. 3 schematisch das Einsetzen in und das Entnehmen einer Bürstenkassette aus der Kassettenaufnahme zeigt;
Fig. 4a, 4b bzw. 4c eine Ausführungsform der Bürstenkassette in einer Draufsicht, einer Seitenansicht bzw. einer Vorderansicht zeigen;
Fig. 5a, 5b und 5c eine Ausführungsform für Besatzmaterial in einer Seitenansicht, einer Vorderansicht bzw. einer Draufsicht zeigen;
Fig. 6a, 6b bzw. 6c ein weiteres Ausführungsbeispiel einer Bürstenkassette in einer Draufsicht, einer Seitenansicht bzw. einer Vorderansicht zeigen;
Fig. 7 einen beispielhaften Bürstriemen in einem Zustand zeigt, bei dem er von der Bürstenkassette abgelöst ist;
Fig. 8 ein beispielhaftes Kammelement zeigt;
Fig. 9 eine Nocke zeigt, die auf einem Grundriemen befestigt ist;
Fig. 10a und 10b zeigen, wie ein Kammelement an einer Nocke befestigt wird; und
Fig. 11 eine Draufsicht auf einen Ausschnitt eines beispielhaften Bürstriemens der Fig. 7 zeigt.

### BESCHREIBUNG VON AUSFÜHRUNGSFORMEN

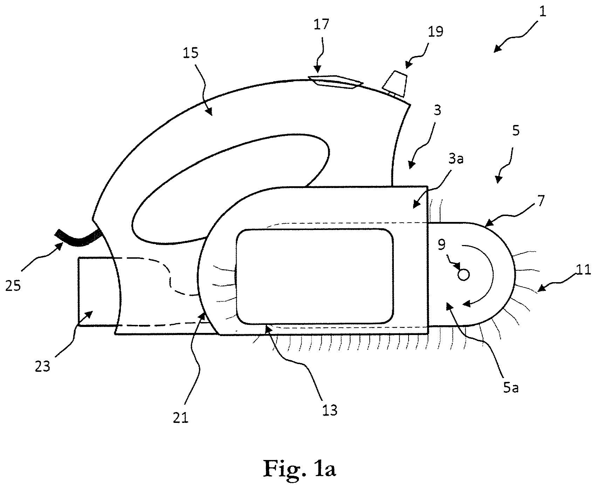

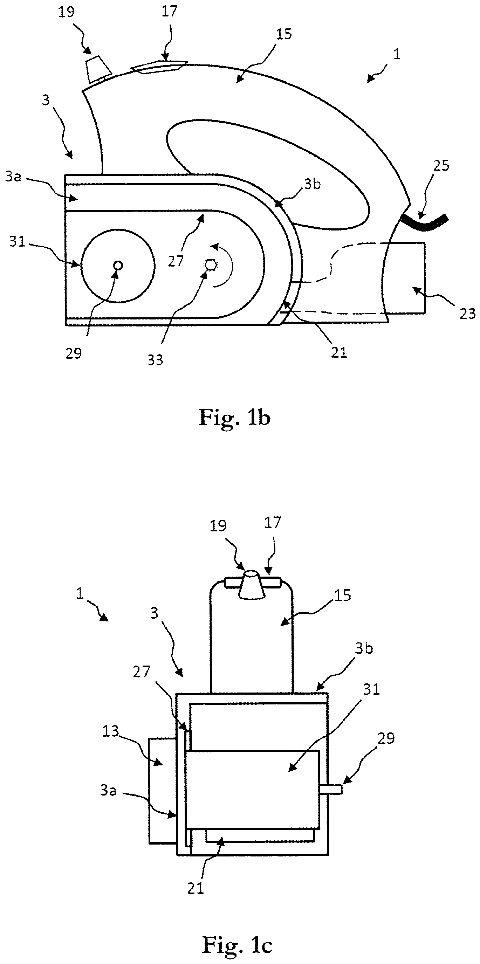

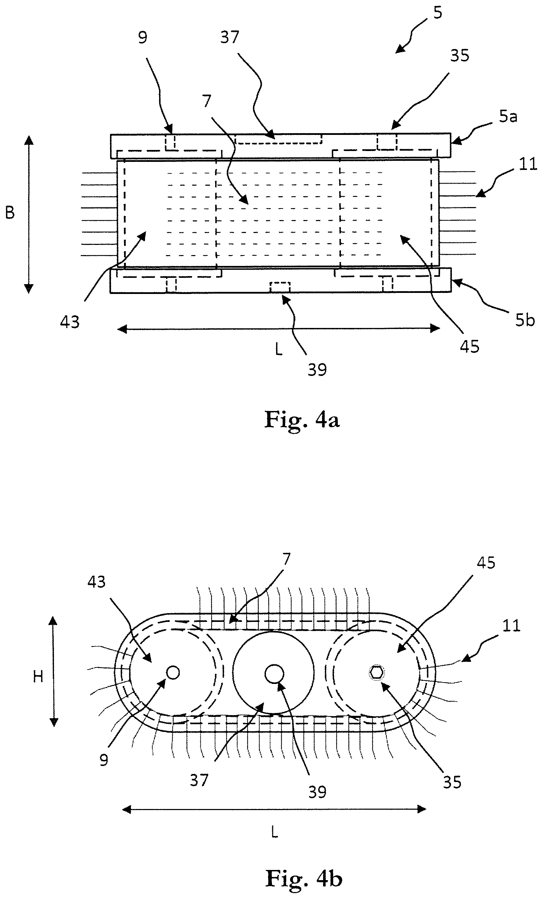

Die Fig. 1a zeigt in einer schematischen Darstellung eine Ausführungsform der erfindungsgemäßen Bürstvorrichtung 1 in einer Seitenansicht. Eine in eine Kassettenaufnahme 3 eingesetzte Bürstenkassette 5, von der im Wesentlichen eine Seitenwand 5a zu sehen ist, weist einen Bürstriemen 7 auf, der als ein umlaufendes Flachband ausgebildet ist. Der rotierende Pfeil in Fig. 1 deutet die Umlaufbewegung des Bürstriemens 7 um eine Umlaufrolle (43 in den Fig.4a und 4b) an, die über eine Umlaufrollenachse 9 drehbar in der Bürstenkassette 5 gelagert ist. Der Bürstriemen 7 ist mit Besatzmaterial 11 besetzt, das hier als Borsten aus Federstahldraht ausgebildet ist. Auf einer Seitenwand 3a der Kassettenaufnahme 3 ist ein Getriebegehäuse 13 montiert, in dem ein Getriebe (nicht gezeigt) untergebracht ist. Das Getriebe koppelt einen in der Kassettenaufnahme 3 untergebrachten Antriebsmotor (31 in Fig. 1b) über einen Treibzapfen (33 in Fig. 1b) und eine Antriebsachse (35 in den Fig. 4a und 4b) mit einer Antriebsrolle (45 in den Fig.4a und 4b). Auf der Kassettenaufnahme 3 ist ferner ein Griff 15 befestigt, mit dem die Bürstvorrichtung 1 gehalten werden kann. Auf dem Griff 15 ist ein Schalter 17 montiert, der drei Schalterstellungen (Vor-Stopp-Rück) aufweist, mit denen der Antriebsmotor und damit der Bürstriemen 7 in einen Vorlaufbetrieb, in einen Stoppbetrieb und einen Rücklaufbetrieb versetzt werden kann. Mit einem Leistungsregler 19 kann die Leistung des Antriebsmotors 31 und damit die Geschwindigkeit bzw. die Zugkraft des Bürstriemens 7 geregelt werden. Am hinteren Ende der Bürstvorrichtung 1 befindet sich eine Absaugöffnung 21, die in einen Absaugkanal 23 mündet, an dem eine Absaugvorrichtung wie beispielsweise ein Haushaltssauger anschließbar ist. Am hinteren Ende der Bürstvorrichtung 1 tritt ferner ein Elektrokabel 25 aus, mit dem die Bürstvorrichtung 1 mit elektrischer Energie für den Betrieb des Antriebsmotors versorgt wird. Das Elektrokabel wird im Inneren der Bürstvorrichtung 1 zum Antriebsmotor 31 weitergeführt, um diesen mit elektrischer Energie zu versorgen.

Fig. 1b zeigt in einer schematischen Darstellung die Ausführungsform der erfindungsgemäßen Bürstvorrichtung 1 in einer Ansicht, welche die zur Ansicht der Fig. 1a gegenüberliegende Seite der Bürstvorrichtung 1 darstellt. In der Ansicht der Fig. 1b ist die Bürstenkassette 5 aus der Kassettenaufnahme 3 entnommen und entsprechend nicht gezeigt. In der Seitenwand 3a der Kassettenaufnahme 3 ist eine Aussparung 27 für die teilweise Aufnahme einer Bürstenkassette 5 vorgesehen. Die Aussparung 27 weist im Wesentlichen die Form einer Bürstenkassette 5 auf und hat eine Tiefe von beispielsweise 3 mm, so dass eine Bürstenkassette 5 nach dem Einsetzen in die Bürstenkassette 5 in dieser Aussparung 27 teilweise versenkt ist und dadurch in der durch die Aussparung 27 vorgesehenen Position gehalten wird. Durch die Seitenwand 3a läuft lotrecht eine Motorachse eines auf der Seitenwand 3a befestigten Antriebsmotors 31. Die Rotation der Motorachse wird mittels eines auf der Rückseite der Seitenwand 3a montierten Getriebes 13 (siehe Fig. 1a und 1c) auf einen Treibzapfen 33 übertragen, der als Außensechskant ausgebildet ist. Dieser Treibzapfen 33 dient zur Ankopplung der Antriebsachse 35 einer Bürstenkassette 5, wenn in die Kassettenaufnahme 3 eingesetzt wird. Auf dem Gehäuse des Antriebsmotors 31 ist ein Arretierungsstift 29 befestigt, der lotrecht zur Seitenwand 3a der Kassettenaufnahme 3 steht. Die Kassettenaufnahme 3 ist zu ihrer Oberseite und Rückseite hin durch eine Rückwand 3b abgeschlossen, die eine gekrümmte Oberfläche aufweist. An dieser Rückwand 3b ist der Griff 15 mit dem Schalter 17, dem Leistungsregler 19 und dem Elektrokabel 25 befestigt. Die Rückwand 3b weist in ihrem hinteren Ende eine Absaugöffnung 21 auf, die in den Absaugkanal 23 mündet.

Fig. 1c zeigt in einer schematischen Darstellung die Ausführungsform der erfindungsgemäßen Bürstvorrichtung 1 in einer Vorderansicht. Auch in dieser Ansicht ist die Bürstenkassette 5 entnommen und entsprechend nicht gezeigt. In Fig. 1c ist das an der Außenseite der Seitenwand 3a der Kassettenaufnahme 3 befestigte Getriebegehäuse 13 zu sehen, welches ein Getriebe unterbringt. Das Getriebegehäuse 13 bzw. das Getriebe ist gegenüber dem Antriebsmotor 31 befestigt. Der Antriebsmotor 31 ist als Elektromotor ausgeführt. In den Figuren ist schematisch nur das Motorgehäuse dargestellt. Eine Motorachse des Antriebsmotors 31 führt in das Getriebegehäuse 13 und koppelt an das dort befindliche Getriebe an.

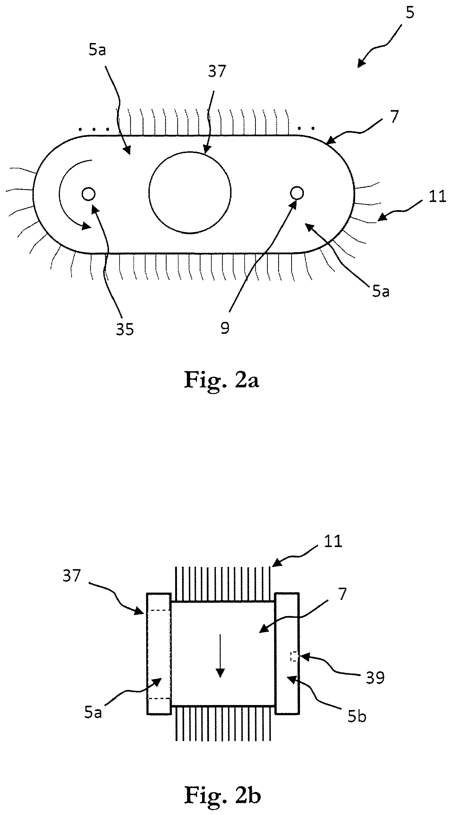

Die Fig. 2a und 2b zeigen in einer schematischen Darstellung eine Seitenansicht und eine Vorderansicht einer Ausführungsform einer Bürstenkassette 5. Die Bürstenkassette 5 ist in einem Zustand gezeigt, in der sie aus der Kassettenaufnahme 3 entfernt wurde. Die Bürstenkassette 5 umfasst einen Bürstriemen 7, der mit Besatzmaterial 11 besetzt ist, das hier als Borsten aus Federstahldraht ausgebildet ist. Die Bürstenkassette 5 ist auf beiden Längsseiten jeweils durch eine Seitenwand 5a bzw. 5b begrenzt. Die Seitenansicht der Fig. 2a zeigt jene Seitenwand 5a der Bürstenkassette 5, die beim Einsetzen der Bürstenkassette 5 in die Kassettenaufnahme 3 in die Aussparung 27 der Seitenwand 3a (siehe Fig. 1b) der Kassettenaufnahme 3 eingreift. Eine Antriebsachse 35 ist mit einer Antriebsrolle (45 in den Fig. 4a und 4b) verbunden. Die Antriebsachse 35 ist so ausgelegt, dass beim Einsetzen der Bürstenkassette 5 in die Kassettenaufnahme 3 der Treibzapfen 33 in die Antriebsachse 35 eingreift. Fig. 2a zeigt ferner eine Umlaufrollenachse 9, die in den Seitenwänden 5a und 5b der Bürstenkassette 5 gelagert ist und die mit einer Umlaufrolle (43 in den Fig. 4a und 4b) verbunden ist und diese drehbar in der Bürstenkassette 5 lagert. Ein mit Besatzmaterial 11 besetzter Bürstriemen 7 läuft um die Antriebsrolle und Umlenkrolle. Die Seitenwand 5a der Bürstenkassette 5 weist ferner eine Motoreinführungsöffnung 37 auf, durch die der Antriebsmotor 31 in die Bürstenkassette 5 eingeführt wird, wenn die Bürstenkassette 5 in die Kassettenaufnahme 3 eingesetzt wird. In der Vorderansicht der Fig. 2b ist die Einführungsöffnung 37 gestrichelt dargestellt. In der hier gezeigten Ausführungsform der Bürstvorrichtung 1 hat der Antriebsmotor 31 eine zylindrischer Gestalt, so dass die Motoreinführungsöffnung 37 als kreisförmiges Loch in der Kassettenwand 5a ausgeführt ist.

Ferner ist in der Vorderansicht der Fig. 2b auch eine Arretierungsöffnung 39 in der Seitenwand 5b der Bürstenkassette 5 zu sehen. Beim Einsetzen der Bürstenkassette 5 in die Kassettenaufnahme 3 wird der Arretierungsstift 29 in diese Arretierungsöffnung 39 eingeführt und durch die Seitenwand 5b durchgeführt. Die Arretierungsöffnung 39 durchdringt die Seitenwand 5b vollständig. In Fig. 2b umfasst die eingezeichnete Dicke der Seitenwand 5b auch einen Überstand, der lediglich im äußeren Randbereich der Seitenwand vorhanden ist. Im Innenbereich hat die Seitenwand 5b dagegen eine Dicke, welche der Arretierungsöffnung 39 entspricht. Gleichermaßen hat auch die Seitenwand 5a der Bürstenkassette 5 äußeren Randbereich einen Überstand.

Schließlich ist eine Umlaufrichtung des Bürstriemens 7 in den Fig. 2a und 2b durch einen Pfeil angedeutet.

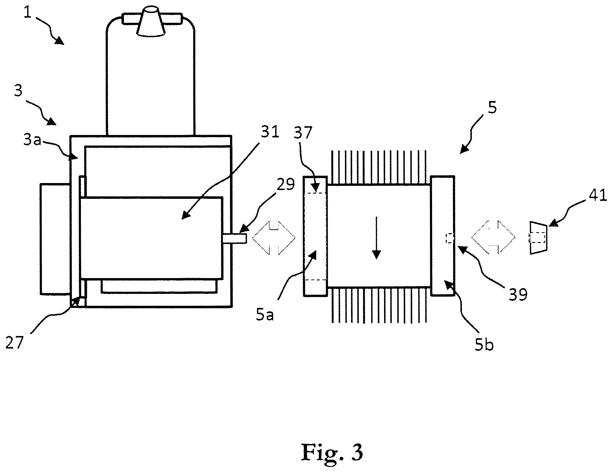

Fig. 3 zeigt schematisch das Einsetzen in und das Entnehmen einer Bürstenkassette 5 aus der Kassettenaufnahme 3. Zum Einsetzen der Bürstenkassette 5 in die Kassettenaufnahme 3 wird die Bürstenkassette 5 über eine offene Seite der Kassettenaufnahme 3 (in Fig. 3 von rechts) in die Kassettenaufnahme 3 eingeführt, so dass der Antriebsmotor 31 durch die Motoreinführungsöffnung 37 der Bürstenkassette 5 in die Bürstenkassette 5 eingeführt wird. Ist die Bürstenkassette 5 vollständig in die Kassettenaufnahme 3 eingeführt, so senkt sich ein Teil der Seitenwand 5a der Bürstenkassette 5 formschlüssig in die dafür vorgesehene Aussparung 19 in der Seitenwand 3a der Kassettenaufnahme 3. Der Arretierungsstift 29, der mit dem Gehäuse des Antriebsmotors 31 fest verbunden ist, wird beim Einsetzen der Bürstenkassette 5 in die Arretierungsöffnung 39 der Seitenwand 5b der Bürstenkassette 5 eingeführt und durch diese hindurchgeführt, so dass der Arretierungsstift 29 im eingesetzten Zustand der Bürstenkassette 5 durch die Seitenwand 5b ragt. Nach dem Einsetzen der Bürstenkassette 5 in die Kassettenaufnahme 3 wird die Bürstenkassette 5 mittels einer Arretierungsschraube 41 arretiert, die auf den aus der Seitenwand 5b herausragenden Arretierungsstift 29 geschraubt wird. Hierfür weist die Arretierungsschraube 41 ein Innengewinde auf, das mit einem Außengewinde auf dem Arretierungsstift 29 zusammengreift.

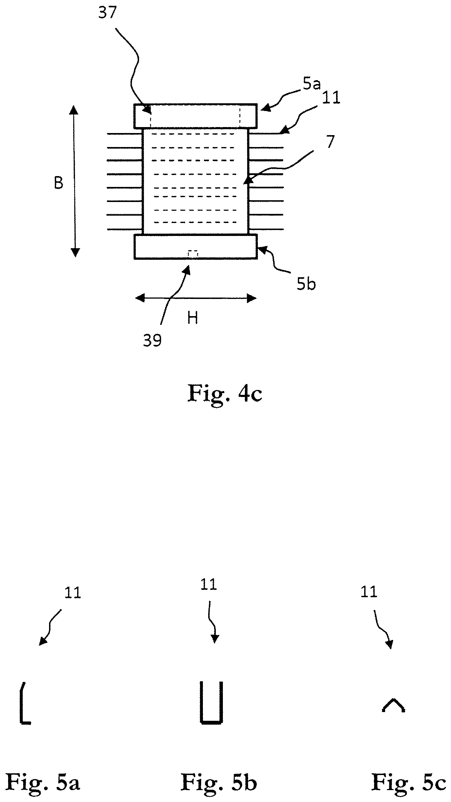

Die Fig. 4a, 4b bzw. 4c zeigen eine erste Ausführungsform der Bürstenkassette 5 in einer Draufsicht, einer Seitenansicht bzw. einer Vorderansicht. In der Draufsicht der Fig. 4a und der Seitenansicht der Fig. 4b sind gestrichelt die im Inneren der Bürstenkassette 5 gelegene Umlaufrolle 43 und Antriebsrolle 45 schematisch gezeigt. Die Umlaufrolle 43 und die Antriebsrolle 45 weisen an ihren beiden seitlichen Randbereichen einen Überstand und dadurch einen etwas größeren Durchmesser auf als im Mittenbereich, so dass der Bürstriemen 7, der in Fig. 4b gestrichelt eingezeichnet ist, sicher transportiert wird. Das Besatzmaterial 11 durchdringt den Bürstriemen 7. In der Antriebsrolle ist die Antriebsrollenachse 35 zu erkennen, die eine Aussparung sechskantförmige Vertiefung aufweist, in welche der Triebzapfen 33 der Kassettenaufnahme 5 eingreifen kann. In der Seitenansicht der Fig. 4b ist im Zentrum der Bürstenkassette 5 die Motoreinführungsöffnung 37 in der Seitenwand 5a und die auf der gegenüberliegenden Seite 5b gelegene Kassettenarretierung 39 zu sehen. Die Bürstenkassette 5 dieser Ausführungsform hat eine beispielhafte Länge L von 15 cm, eine beispielhafte Breite B von 7 cm und eine beispielhafte Höhe H von 5 cm. Die Seitenwände 5a und 5b der Bürstenkassette 5 weisen in ihrem äußeren Randbereich einen Überstand auf, so dass die Umlaufrolle 43 und die Antriebsrolle 45 in der Fig. 4a teilweise von diesem Überstand überdeckt erscheinen. Im Innenbereich entspricht die Dicke der beiden Seitenwände 5a und 5b dagegen den Tiefen der Öffnungen 37 bzw. 39, so dass diese Öffnungen 37 bzw. 39 die Seitenwände 5a bzw. 5b vollständig durchdringen.

Die Fig. 5a, 5b und 5c zeigen eine Ausführungsform für das Besatzmaterial 11 in einer Seitenansicht, einer Vorderansicht bzw. einer Draufsicht. Bei dem beispielhaften Besatzmaterial 11 handelt es sich um Federstahldraht von etwa 4 cm Länge, der einen runden Körper aufweist. Der Federstahldraht ist U-förmig gebogen, wie es in der Vorderansicht der Fig. 5b zu sehen ist. Der Federstahldraht hat eine horizontale Biegung im waagerechten, unteren Mittelteil des U-förmigen Drahtes, wie es in der Draufsicht der Fig. 5c zu erkennen ist. Die Biegung weist in dieser Ausführungsform einen beispielhaften Winkel von etwa 90° auf. Wie in der Seitenansicht der Fig. 5a zu sehen ist, ist der Federstahldraht an den Enden leicht nach hinten gebogen. Der Biegungswinkel beträgt hier beispielhafte 30° und die nach hinten gebogenen Teile des Federstahldrahtes sind jeweils etwa 3 mm lang. Um ein Kratzen des Federstahldrahtes zu vermeiden, sind die Enden des Federstahldrahtes arrondiert. Der Federstahldraht wird von unten in einen Bürstriemen 7 gesteckt, so dass der waagerechte, untere Mittelteil des U-förmigen Drahtes auf dem Bürstriemen 7 zu liegen kommt. Der solchermaßen eingesteckte U-förmige Federstahldraht realisiert auf der Außenseite des Bürstriemens 7 somit zwei Borsten für die Fellpflege von Haustieren.

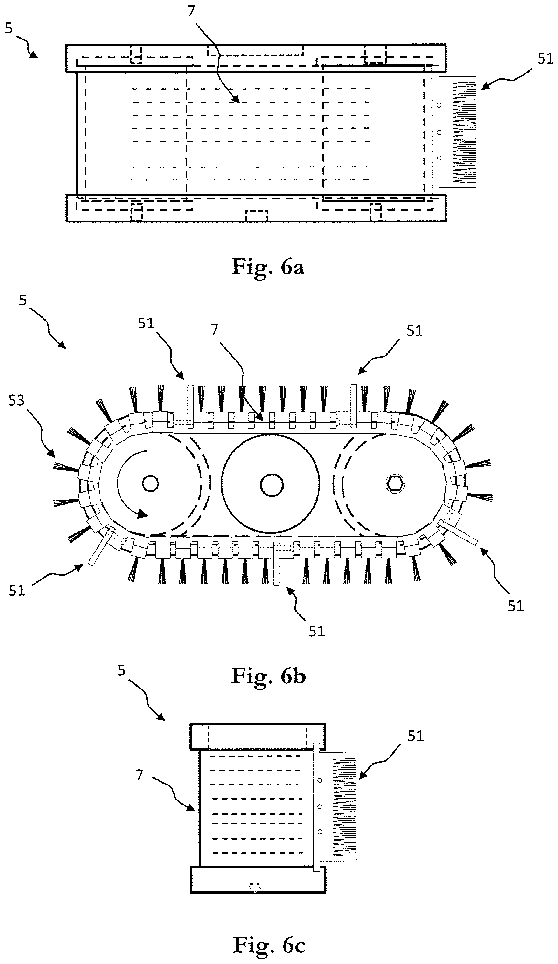

Die Fig. 6a, 6b bzw. 6c zeigen ein weiteres Ausführungsbeispiel einer Bürstenkassette 5 in einer Draufsicht, einer Seitenansicht bzw. einer Vorderansicht. Die Bürstenkassette 5 der Fig. 6a, 6b, bzw. 6c unterscheidet sich von der Bürstenkassette 5 der Fig. 4a, 4b und 4c lediglich darin, dass eine alternative Ausführungsvariante eines Bürstriemens 7 zur Anwendung kommt. Der alternative Bürstriemen 7 ist ein Endlos-Flachriemen, der mit Kammelementen 51 besetzt ist, die auf dem Bürstriemen 7 derart befestigt sind, dass sie im Wesentlichen quer zur Laufrichtung liegen und im Wesentlichen senkrecht auf der Oberfläche des Bürstriemens 7 stehen. Dieser Bürstriemen 7 ist besonders dazu geeignet, Unterwolle, auszudünnen oder abgestorbene Haare effektiv und schnell aus dem Fell zu entfernen.

In der Seitenansicht der Fig. 6b sind fünf Kammelemente 51 dargestellt, die auf dem Bürstriemen 7 in etwa gleichen Abständen angeordnet sind. Zwischen den Kammelementen 51 ist der Bürstriemen 7 mit Borstenbündeln 53 besetzt, die so ausgelegt sind, dass sie etwa so weit aus dem Bürstriemen hervorstehen, wie entsprechende Zacken 55 der Kammelemente 51. Ein Borstenbündel 53 besteht beispielsweise aus mehreren Natur- oder Kunststoff-Fasern, z.B. Nylon. In den Fig. 6a und 6c ist zur Vereinfachung jeweils nur ein Kammelement 51 dargestellt. Die Borstenbündel 53 dienen dazu, einen möglichst gleichmäßigen Andruck des Bürstriemens 7 auf das Fell zu ermöglichen, was die Behandlung angenehmer macht. In alternativen Ausführungsformen können die Borstenbündel 53 auch weggelassen werden.

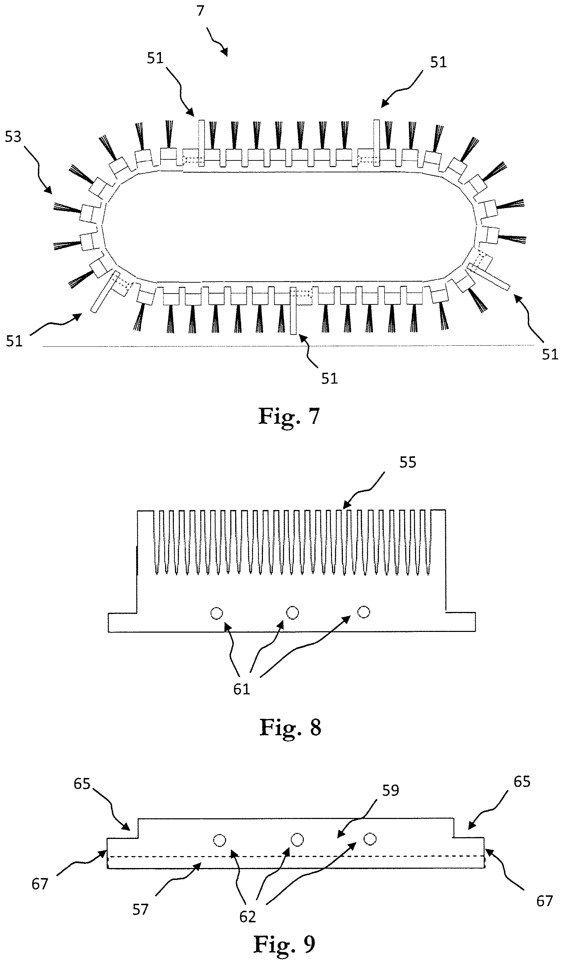

Fig. 7 zeigt den in der Bürstenkassette 5 der Fig. Fig. 6a, 6b bzw. 6c verwendeten Bürstriemen 7 in einem Zustand, bei dem er von der Bürstenkassette 5 (in Fig. 7 nicht gezeigt) abgelöst ist. Der mit Kammelementen 51 besetzte Bürstriemen 7 der Fig. 7 wird in einer elektrischen Flachriemenbürste oder Kassettenbürste (siehe Fig. 6a, 6b, 6c), die den Riemen antreibt, verwendet. Haare, Unterwolle, Verschmutzungen oder andere Partikel im Bürstenbereich können während des Bürstens kontinuierlich abgesaugt werden, wie dies oben im Zusammenhang mit der Bürstvorrichtung der Fig. 1 bis 5 beschrieben wurde.

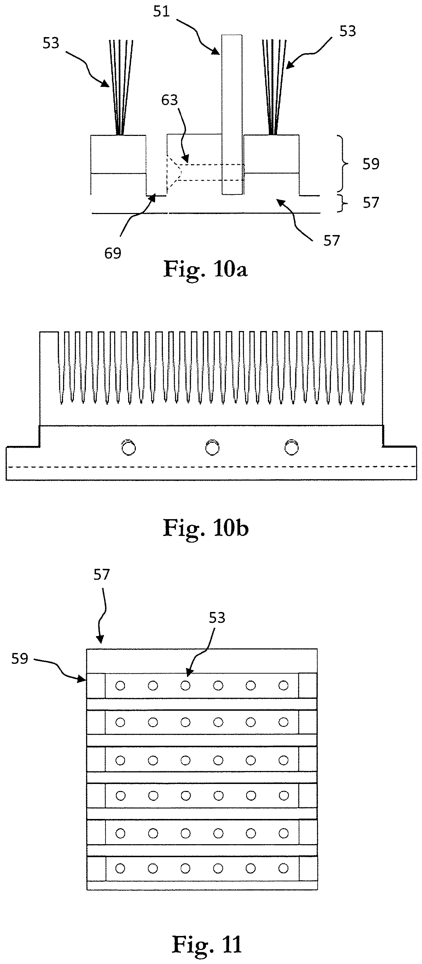

In Fig. 8 ist ein Kammelement 51 in einer Vorderansicht zu sehen. Das Kammelement 51 weist mehrere Zacken 55 auf. Das Kammelement 51 kann aus Kunststoff oder Metall sein. Die Zwischenräume der Zähne werden zum Ende hin vorzugsweise enger. Die Länge der Zähne bzw. Schlitze, sowie die Breite kann je Anwendungsgebiet (Langhaar, Kurzhaar oder Fell-Typ) variieren. Das Kammelement 51 weist ferner Bohrungen 61 auf, die zur Befestigung des Kammelements 51 an einer Nocke (siehe 59 in den Fig. 10a und 10b) mit beispielsweise Schrauben oder Stiften (z.B. Kunststoffstiften oder Federstiften) nach Art einer Schraub- oder Steckverbindung vorgesehen sind.

Fig. 9 zeigt eine auf einem Grundriemen 57 (Flachriemen) befindliche Nocke 59, an der ein Kammelement 51 befestigt werden kann. Die Nocke 59 weist Bohrungen 62 auf, die zur Befestigung eines Kammelements 51 dienen. Die Nocke 59 weist in einer oberen Hälfte seitliche Nockenaussparungen 65 auf, die in Laufrichtung des Bandes laufen. Dadurch entstehen in einer unteren Hälfte des Grundriemens 57 entsprechende seitliche Nockenvorsprünge 67, die in die Seitenwände der Bürstenkassette 5 eingreifen (vgl. 5a und 5b der Fig. 4a), so dass der Grundriemen 57 bzw. der Bürstriemen 7 auf der Bürstenkassette 5 beim Umlauf in Position gehalten wird. Die Nocke 59 kann aus einem Material, beispielsweise aus einem Kunststoff bestehen, das härter ist als das Material des Grundriemens, auf dem er befestigt wird. Damit bietet die Nocke 59 eine stabile Befestigungsmöglichkeit für das Kammelement 51 und der Grundriemen 57 genügend Flexibilität für leichten Lauf um die Rollen. In einer Ausführungsform wird als Material der Nocke 59 ein kompakter Polyurethane-Kunststoff SNE der Härte 80 ShA verwendet, wogegen als Material des Grundriemens 57 ein Poly-urethane-Kunststoff PU der Härte 60-70 ShA verwendet wird.

In der Querschnittsansicht der Fig. 10a bzw. der Vorderansicht der Fig. 10b ist zu sehen, wie ein Kammelement 51 durch Einführen einer Schraube bzw. eines Stifts 63 in eine Bohrung (61, 62 in den Fig. 8 bzw. 9) fest mit einer Nocke 59 verbunden wird. In Fig. 10a sind ferner zwei benachbarte Nocken zu sehen, die jeweils mit einem Borstenelement 53 besetzt sind.

Fig. 11 zeigt schließlich eine ausschnittsweise Ansicht des Bürstriemens 7 in einer Draufsicht. Auf einem Flachriemen 57 sind mehrere Nocken 59 befestigt, die mit jeweiligen Borstenbündeln 53 besetzt sind. In der Draufsicht der Fig. 11 sind aus Gründen der Vereinfachung keine Kammelemente 51 gezeigt.

### BEZUGSZEICHENLISTE

- 1: Bürstvorrichtung
- 3: Kassettenaufnahme
- 3a: Seitenwand der Kassettenaufnahme
- 3b: Rückwand der Kassettenaufnahme
- 5: Bürstenkassette
- 5a: Seitenwand der Bürstenkassette
- 5b: Seitenwand der Bürstenkassette
- 7: Bürstriemen
- 9: Umlaufrollenachse
- 11: Besatzmaterial
- 13: Getriebe mit Getriebegehäuse
- 15: Griff
- 17: Schalter (Vor-Stopp-Rück)
- 19: Leistungsregler
- 21: Absaugöffnung
- 23: Absaugkanal
- 25: Elektrokabel
- 27: Aussparung für Positionierung der Bürstenkassette
- 29: Arretierungsstift
- 31: Antriebsmotor mit Antriebsmotorgehäuse
- 33: Treibzapfen
- 35: Antriebsachse
- 37: Motoreinführungsöffnung der Bürstenkassette
- 39: Arretierungsöffnung
- 41: Arretierungsschraube
- 43: Umlaufrolle
- 45: Antriebsrolle
- 51: Kammelement
- 53: Borstenbündel
- 55: Zacken des Kammelements
- 57: Grundriemen
- 59: Nocke
- 61: Bohrungen im Kammelement
- 62: Bohrungen im Nocken
- 63: Schraube oder Stift
- 65: Nockenaussparung
- 67: Nockenvorsprung

## Patentansprüche

1. Bürstvorrichtung zum Bürsten, Kämmen, Striegeln, Massieren oder Entfilzen, insbesondere für die Fellpflege von Haustieren, mit einer Kassettenaufnahme (3) zur Aufnahme einer Bürstenkassette (5) mit einem antreibbaren Bürstriemen (7), **dadurch gekennzeichnet, dass**
die Kassettenaufnahme (3) und die Bürstenkassette (5) so ausgelegt sind, dass die Bürstenkassette (5) in die Kassettenaufnahme (3) einsetzbar ist und aus dieser wieder entfernbar ist;
die Bürstvorrichtung einen Antriebsmotor (31) und ein an der Kassettenaufnahme (3) angebrachtes Getriebe (13) aufweist, die dazu ausgelegt sind, den Bürstriemen (7) anzutreiben; und
die Bürstenkassette (5) eine Öffnung (37) aufweist, die zum Einführen des Antriebsmotors (31) in die Bürstenkassette (5) beim Einsetzen der Bürstenkassette (5) in die Kassettenaufnahme (3) ausgelegt ist.

2. Bürstvorrichtung nach Anspruch 1, bei der die Bürstenkassette (5) eine Antriebsachse (35) zum Antrieb des Bürstriemens (7) aufweist, und bei der die Kassettenaufnahme (3) einen Treibzapfen (33) zur mechanischen Ankopplung der Antriebsachse (35) der Bürstenkassette (5) lagert, der in die Antriebsachse (35) eingreift, wenn die Bürstenkassette (5) in die Kassettenaufnahme (3) eingesetzt wird.

3. Bürstvorrichtung nach Anspruch 2, bei der die Bürstenkassette (5) ferner zwei Rollen (43, 45) enthält, um die der Bürstriemen (7) läuft, wobei wenigstens eine der Rollen als Antriebsrolle (45) mit der Antriebsachse (35) der Bürstenkassette (5) verbunden ist, so dass im eingesetzten Zustand der Bürstenkassette (5) auf diese Antriebsrolle (35) eine Antriebskraft übertragen wird.

4. Bürstvorrichtung nach Anspruch 2, bei der das Getriebe (13) den Antriebsmotor (31) mit der Antriebsachse (35) und dem Treibzapfen (33) koppelt.

5. Bürstvorrichtung nach einem der vorstehenden Ansprüche, bei der die Kassettenaufnahme (3) eine Aussparung (27) aufweist, die zur formschlüssigen Aufnahme wenigstens eines Teils der Bürstenkassette (5) ausgelegt ist, so dass die Bürstenkassette (5) im gekoppelten Zustand in einer vorbestimmten Position gehalten wird.

6. Bürstvorrichtung nach einem der vorstehenden Ansprüche, die ferner eine Arretierung (41) aufweist, welche zur Arretierung der Bürstenkassette (5) im eingesetzten Zustand dient.

7. Bürstvorrichtung nach einem der vorstehenden Ansprüche, bei der die Kassettenaufnahme (3) zu einer Seite geöffnet ist, so dass die Bürstenkassette (5) in die Kassettenaufnahme (3) eingesetzt oder aus dieser entnommen werden kann.

8. Bürstvorrichtung nach einem der vorstehenden Ansprüche, bei der der Bürstriemen (7) ein Grundriemenband (57) aufweist, auf dem ein oder mehrere Kammelemente (51) derart befestigt sind, dass sie im Wesentlichen quer zur Laufrichtung des Grundriemenbandes (57) liegen und im Wesentlichen senkrecht zur Oberfläche des Grundriemenbandes (57) stehen.

9. Verwendung der Bürstvorrichtung nach einem der Ansprüche 1 bis 8 zum Bürsten, Kämmen, Striegeln, Massieren oder Entfilzen, insbesondere für die Fellpflege von Haustieren.

10. Bürstenkassettensystem mit einer Bürstvorrichtung (1) nach einem der Ansprüche 1-8, wobei das Bürstenkassettensystem mehrere Bürstenkassetten (5) mit jeweils verschiedenem Bürstriemen (7) umfasst und die Kassettenaufnahme (3) der Bürstvorrichtung (1) dazu ausgelegt ist, die mehreren Bürstenkassetten (5) in austauschbarer Weise aufzunehmen.

## Claims

1. A brush device for brushing, combing, grooming, massaging or detangling, in particular for the coat and skin care of domestic animals, comprising a cassette holder (3) for receiving a brush cassette (5) having a drivable brush belt (7), **characterized in that**
the cassette holder (3) and the brush cassette (5) are designed in such a way that the brush cassette (5) can be inserted into, and removed again from, the cassette holder (3);
the brush device comprising a drive motor (31) and a transmission (13) attached to the cassette holder (3) which are designed to drive the brush belt (7); and wherein
the brush cassette (5) has an opening (37) which is designed to allow the insertion of the drive motor (31) into the brush cassette (5) when the brush cassette (5) is inserted into the cassette holder (3).

2. The brush device according to claim 1, wherein the brush cassette (5) has a drive axle (35) for driving the brush belt (7) and wherein the cassette holder (3) supports a drive pin (33) for the mechanical coupling of the drive axle (35) of the brush cassette (5), said pin meshing with the drive axle (35) when the brush cassette (5) is inserted into the cassette holder (3).

3. The brush device according to claim 2, wherein the brush cassette (5) also contains two rollers (43, 45) around which the brush belt (7) runs, wherein at least one of the rollers is connected to the drive axle (35) of the brush cassette (5) as the driving roller (45) so as to transmit a driving force to this driving roller (35) when the brush cassette (5) is inserted.

4. The brush device according to claim 2, wherein the transmission (13) couples the drive motor (31) to the drive axle (35) and the drive pin (33).

5. The brush device according to any of the preceding claims, wherein the cassette holder (3) has a recess (27) which is designed to receive at least part of the brush cassette (5) in a form-fit fashion, such that the brush cassette (5) is in a predetermined position when it is coupled.

6. The brush device according to any of the preceding claims, which also has a locking mechanism (41) that serves to lock the brush cassette (5) when it is inserted.

7. The brush device according to any of the preceding claims, wherein the cassette holder (3) is open on one side, and therefore the brush cassette (5) can be inserted into, or removed from, the cassette holder (3).

8. The brush device according to any of the preceding claims, wherein the brush belt (7) has a basic belt strip (57) on which one or more comb elements (51) are mounted in such a way that they are substantially transverse to the running direction of the basic belt strip (57) and are substantially perpendicular to the surface of the basic belt strip (57).

9. Use of the brush device according to any of claims 1 to 8 for brushing, combing, grooming, massaging or detangling, in particular for the coat and skin care of domestic animals.

10. A brush cassette system having a brush device (1) according to any of the preceding claims, wherein the brush cassette system comprises a plurality of brush cassettes (5) each having various brush belts (7) and the cassette holder (3) of the brush device (1) is designed to receive the plurality of brush cassettes (5) in an exchangeable way.

## Revendications

1. Dispositif de brossage pour le brossage, le peignage, le pansage, le massage ou le démêlage, en particulier pour le soin du pelage d'animaux de compagnie, comprenant un récepteur de cassette (3) pour la réception d'une cassette de brosse (5) avec une courroie de brossage (7) actionnable, **caractérisé en ce que**
le récepteur de cassette (3) et la cassette de brosse (5) sont conçus de telle sorte que la cassette de brosse (5) peut être insérée dans le récepteur de cassette (3) et retirée de celui-ci ;
le dispositif de brossage présente un moteur d'entraînement (31) et une transmission (13) fixée sur le récepteur de cassette (3), conçus pour actionner la courroie de brossage actionnable (7) ; et
la cassette de brosse (5) présente une ouverture (37), conçue pour insérer le moteur d'entraînement (31) dans la cassette de brosse (5) lors de l'insertion de la cassette de brosse (5) dans le récepteur de cassette (3).

2. Dispositif de brossage selon la revendication 1, dans lequel la cassette de brosse (5) présente un axe d'entraînement (35) prévu pour entraîner la courroie de brossage (7) et dans lequel la cassette de brosse (5) loge un pivot d'entraînement (33), prévu pour le couplage mécanique de l'axe d'entraînement (35) de la cassette de brosse (5), lequel s'engage dans l'axe d'entraînement (35) lorsque la cassette de brosse (5) est insérée dans le récepteur de cassette (3).

3. Dispositif de brossage selon la revendication 2, dans lequel la cassette de brosse (5) comprend en outre deux galets (43, 45), autour desquels tourne la courroie de brossage (7), au moins un des galets étant relié, en tant que galet d'entraînement (45), avec l'axe d'entraînement (35) de la cassette de brosse (5) de manière à ce que, à l'état inséré de la cassette de brosse (5), une force d'entraînement est transmise sur ce galet d'entraînement (45).

4. Dispositif de brossage selon la revendication 2, dans lequel la transmission (13) couple le moteur d'entraînement (31) avec l'axe d'entraînement (35) et le pivot d'entraînement (33).

5. Dispositif de brossage selon l'une des revendications précédentes, dans lequel le récepteur de cassette (3) présente une cavité (27) laquelle est conçue pour recevoir par liaison de forme au moins une partie de la cassette de brosse (5), de manière à ce que, à l'état couplé, la cassette de brosse (5) est maintenue dans une position prédéterminée.

6. Dispositif de brossage selon l'une des revendications précédentes, comprenant en outre un dispositif de blocage (41) destiné à bloquer la cassette de brosse (5) à l'état inséré.

7. Dispositif de brossage selon l'une des revendications précédentes, dans lequel le récepteur de cassette (3) est ouvert vers un côté de manière à pouvoir insérer la cassette de brosse (5) dans le récepteur de cassette (3) ou la retirer de celui-ci.

8. Dispositif de brossage selon l'une des revendications précédentes, dans lequel la courroie de brossage (7) présente une bande de courroie de base (57), sur laquelle un ou plusieurs éléments de peigne (51) sont fixés de manière à être disposés sensiblement transversalement par rapport au sens de rotation de la bande de courroie de base (57) et à être sensiblement perpendiculaire à la surface de la bande de courroie de base (57).

9. Utilisation du dispositif de brossage selon l'une des revendications 1 à 8 pour le brossage, le peignage, le pansage, le massage ou le démêlage, en particulier pour le soin du pelage d'animaux de compagnie.

10. Système de cassettes de brosse comprenant un dispositif de brossage (1) selon l'une des revendications 1 à 8, dans lequel le système de cassettes de brosse comprend une pluralité de cassettes de brosse (5) ayant chacune une courroie de brossage (7) différente et dans lequel le récepteur de cassette (3) du dispositif de brossage (1) est conçu pour recevoir de manière interchangeable la pluralité de cassettes de brosse (5).
